Europäisches Patentamt

European Patent Office

Office européen des brevets

(11) Publication number: **0 669 297 A1**

# EUROPEAN PATENT APPLICATION

(21) Application number: **95102441.3**

(22) Date of filing: **21.02.95**

(51) Int. Cl.6: **C04B 41/00, B28D 1/22**

(30) Priority: **23.02.94 JP 25613/94**

(43) Date of publication of application:
**30.08.95 Bulletin 95/35**

(84) Designated Contracting States:
**DE FR GB NL**

(71) Applicant: **SUMITOMO ELECTRIC INDUSTRIES, LTD.**
**5-33, Kitahama 4-chome,**
**Chuo-ku**
**Osaka-shi,**
**Osaka 541 (JP)**

(72) Inventor: **Harano, Katsuko, c/o Itami Works of Sumitomo**
**Elec. Industries, Ltd,**
**1-1, Koyakita 1-chome**
**Itami-shi,**
**Hyogo (JP)**
Inventor: **Ota, Nobuhiro, c/o Itami Works of Sumitomo**
**Elec. Industries, Ltd,**
**1-1, Koyakita 1-chome**
**Itami-shi,**
**Hyogo (JP)**
Inventor: **Fujimori, Naoji, c/o Itami Works of Sumitomo**
**Elec. Industries, Ltd,**
**1-1, Koyakita 1-chome**
**Itami-shi,**
**Hyogo (JP)**

(74) Representative: **Herrmann-Trentepohl, Werner, Dipl.-Ing.**
**Patentanwälte Herrmann-Trentepohl,**
**Kirschner, Grosse, Bockhorni & Partner**
**Forstenrieder Allee 59**
**D-81476 München (DE)**

(54) **Method of working aluminum nitride ceramics.**

(57) A method of working aluminum nitride ceramics is adapted to enable accurate cutting and smoothing of a surface of an aluminum nitride ceramics workpiece and to improve the working speed without exerting a bad influence on the material of the aluminum nitride ceramics workpiece itself. A surface of an aluminum nitride ceramics workpiece (5) is irradiated with light (2) having a wavelength which is in the range of 190 nm and not more than 360 nm, and worked. Proper working can be performed by defining the energy density of the light as applied, the divergence angle of a beam and the half-width of the spectrum in prescribed ranges. A laser beam (2) is converged by cylindrical lenses (3, 4) or cylindrical mirrors. It is possible to widen the range of application of aluminum nitride ceramics to the field of structural members, which have generally been hard to work with requirement for high costs.

FIG.1

## BACKGROUND OF THE INVENTION

### Field of the Invention

The present invention relates to a method of working aluminum nitride ceramics which is applied to tools, machine parts employed under a high temperature and the like, and more particularly, it relates to a method of cutting an aluminum nitride ceramics workpiece and smoothing its surface in high efficiency and high accuracy.

### Description of the Background Art

Aluminum nitride ceramics is so hard that it is extremely difficult to work the same. Such aluminum nitride ceramics is surface-ground with a grindstone which is prepared by binding diamond grains with a binder.

However, such grinding with a diamond grindstone requires a long working time. Further, cracks resulting from the grinding disadvantageously exert a bad influence on the material strength of the aluminum nitride ceramics itself.

On the other hand, cutting of the aluminum nitride ceramics is also performed with a diamond grindstone. However, the diameter of a grindstone which is industrially practicable for such grinding is set at about several 100 $\mu$m in consideration of the strength of the grindstone itself, and hence a wide cut margin is required in such cutting with a grindstone in order to discharge abrasive grains and chips of the workpiece.

In general, therefore, aluminum nitride ceramics is thermally cut with a laser beam such as a $CO_2$, CO or YAG laser beam. In this case, however, infrared light having a wavelength of at least 1 $\mu$m is employed for working the material by heating, melting and evaporating the same and hence the work periphery is influenced and deteriorated by the heat. Further, the material is abruptly heated and cooled locally by such irradiation with the laser beam, leading to cracks caused by thermal stress. Further, a metal layer is disadvantageously formed on the worked portion to reduce the function of the aluminum nitride ceramics material itself. Thus, application of the laser to working of aluminum nitride ceramics is limited to drilling, scribing etc. of ceramics parts requiring no working accuracy.

When an aluminum nitride ceramics workpiece is cut with a laser beam in general, aluminum nitride ceramics forming the work periphery is deteriorated by heat and cracks are caused by thermal stress, to extremely reduce the strength of the workpiece. Further, a metal layer is formed on the worked part, to deteriorate the function of the aluminum nitride ceramics material. Therefore, application of laser beam machining to an aluminum nitride ceramics member is limited. In order to prevent such bad influences, it is necessary to employ a pulsed oscillation laser beam, to shorten the time for heating the workpiece by reducing the pulse duration and the oscillation frequency thereby relaxing thermal stress, and to inhibit formation of the metal layer by an external electric field.

A diamond grindstone is adapted to grind a workpiece by polishing the same through partial heat. In this case, the workpiece is heated up to several 100°C by frictional heat, to inevitably receive bad influences. Further, the working shape is limited to a planar or linear shape. In addition, it is difficult to fix the workpiece. If the workpiece is too small or has an undefined shape, it is so difficult to grind the same that workability thereof is deteriorated, while such working may be disabled depending on the case. Further, skive grinding disadvantageously requires a considerably long time.

## SUMMARY OF THE INVENTION

An object of the present invention is to provide a method of working aluminum nitride ceramics, which can cut or grind an aluminum nitride ceramics workpiece with no influence on the material body of the aluminum nitride ceramics workpiece and smooth its surface while improving the working speed therefor.

The method of working aluminum nitride ceramics according to the present invention is characterized in that a surface of an aluminum nitride ceramics workpiece is irradiated with light having a wavelength which is in the range of not more than 360 nm, or at least 190 nm and not more than 360 nm.

The energy density of the light as applied is preferably in the range of at least 10 W/cm$^2$ and not more than 10$^{11}$ W/cm$^2$.

Further, it is possible to attain excellent working by employing a pulsed laser beam and setting its energy density per pulse in the range of at least 10$^{-1}$ J/cm$^2$ and not more than 10$^6$ J/cm$^2$.

In addition, the divergence angle of the laser beam which is oscillated from a laser oscillator is preferably in the range of at least 10$^{-2}$ mrad and not more than 5 x 10$^{-1}$ mrad.

The half-width of the laser beam oscillation spectrum (band width) is preferably at least 10$^{-4}$ nm and less than 1 nm.

Energy dispersion in a section of the laser beam is preferably not more than 10 %.

It is preferable to converge the pulsed laser beam through a cylindrical lens or a cylindrical mirror thereby applying the same to the surface of the aluminum nitride ceramics workpiece.

It is preferable to apply the laser beam in an aqueous solution having a pH value of at least 3 and not more than 6. In this case, the laser beam is applied in a solution of nitric acid, hydrochloric acid, sulfuric acid or aqua regia.

Further, it is preferable to apply the laser beam in an aqueous solution having a pH value of at least 8 and not more than 11. In this case, the laser beam is applied in a solution of potassium hydroxide or sodium hydroxide.

In addition, it is preferable to treat the laser beam through a mask for reducing/projecting the same. In this case, it is preferable that the divergence angle of the laser beam which is oscillated from a laser oscillator is not more than 0.2 mrad and the half-width of the laser beam oscillation spectrum is at least $10^{-4}$ nm and not more than $10^{-2}$ nm.

It is well known in the art that light having a wavelength of not more than 360 nm is ultraviolet light of high photonic energy, which is mainly concerned in excitation of electrons in chemical bonding when the same is absorbed by a material. Namely, it is conceivably possible to exert some influences on nitrogen-aluminum bonds forming aluminum nitride ceramics for changing the same by irradiating the aluminum nitride ceramics with the light having a wavelength of not more than 360 nm. However, it has ordinarily been unthinkable to work a material with ultraviolet light bringing no thermal effect.

The inventors have made deep study on reaction between light and aluminum nitride ceramics, to discover that it is possible to work an aluminum nitride ceramics workpiece in high efficiency without damaging the same by irradiating the workpiece with light having a wavelength of not more than 360 nm. In particular, they have discovered that light having a wavelength of not more than 360 nm and at least 190 nm is effective for working an aluminum nitride ceramics workpiece, to propose the present invention. Due to a large absorption coefficient of aluminum nitride ceramics with respect to light of such a wavelength range, most of the light as applied is absorbed by a surface layer of the aluminum nitride ceramics in this wavelength range, not to infiltrate into the interior. Thus, the energy of the light is efficiently concentrated to the worked portion, whereby it is possible to work the aluminum nitride ceramics workpiece in high efficiency. Also when grinding is performed, it is possible to concentrate the energy of the light only to the surface of the workpiece while substantially completely suppressing influences on the remaining portions, whereby incident angle dependency is reduced.

The light source for the working can be selected from excimer lasers of $F_2$, ArF, KrCl, KrF, XeCl, $N_2$ and XeF, a mercury lamp and synchrotron radiation (SOR), but not restricted to these examples. The excimer lasers have specific oscillation wavelengths of 157, 193, 222, 248, 308, 337 and 353 nm respectively in the aforementioned order. On the other hand, the mercury lamp and SOR have continuous wavelength bands. Such continuous light may be applied, while the wavelength band of the light as employed may be narrowed through an optical filter or the like.

In general, the light which is emitted from such a light source is not in the form of parallel rays, but diverges in free directions with a certain degree of divergence. When the light is converged through a lens, therefore, a portion having a low energy density is formed in the periphery of the converged light. Such light reduces the working accuracy. In working for smoothing a surface of an aluminum nitride ceramics workpiece, it is possible to suppress the degree of reduction in working accuracy by scanning the workpiece. In working such as cutting of an aluminum nitride ceramics member, however, corners formed by such cutting of the member are disadvantageously slightly sagged. This disadvantage is not particularly problematic in ordinary use of the aluminum nitride ceramics member. In precise working of submicron order, however, it is necessary to parallel the rays which are applied to the aluminum nitride ceramics member with each other, in order to overcome the aforementioned disadvantage.

A general method of paralleling rays which are emitted from an excimer laser is adapted to resonate the excimer laser through a resonance mirror of unstable conditions. It is possible to improve converging ability through a lens by reducing the divergence angle of the laser beam which is oscillated from a laser oscillator, from an ordinary value of about 1 to 3 mrad to not more than 5 x $10^{-1}$ mrad. Thus, it is possible to sharpen the angle between the surface of the aluminum nitride ceramics workpiece and the cut surface, thereby improving flatness in the section of the cut surface. It is difficult to reduce the divergence angle of the laser beam to less than $10^{-2}$ mrad, and no remarkable effect can be expected for the working in this case.

The excimer later has a short wavelength and serves as a light source which is suitable for fine working, while the half-width of its oscillation spectrum exerts a serious influence on the working accuracy. A beam whose oscillation spectrum has a half-width exceeding 1 nm is insufficient for working of $\mu$m order.

When working of 0.1 $\mu$m order of further ultraprecision is required, it is effective to narrow the wavelength band. The wavelength band can be narrowed by employing an etalon or through an injection-locked system. The degree of such narrowing of the oscillation wavelength must be in the range of not more than $10^{-2}$ nm, and is preferably at a narrower value. However, it is difficult to narrow the wavelength band to not more than $10^{-4}$ nm while an influence by aberration of the optical system etc. is increased in comparison with this, and no effect on the working can be expected.

A lens or a total reflection mirror is employed for the process of irradiating the surface of the aluminum nitride ceramics workpiece with converged light. The lens or the mirror is prepared from a convex lens or a concave mirror for converging light in the form of a spot. On the other hand, a cylindrical convex lens or a cylindrical concave mirror is employed for linearly converging light. Alternatively, a concave lens and a convex mirror may be combined with each other to obtain parallel rays or a beam having a small angle of convergence which is close thereto. The energy density of the light as applied is controlled by the state of convergence.

The aluminum nitride ceramics workpiece to be worked may be scanned with the light, while it is rather advisable to drive the workpiece in a parallel manner, in order to correctly work the same in a planar shape. In order to smooth the surface of a three-dimensional material, it is necessary to drive both of the light and the workpiece. In order to cut the workpiece, it is effective to apply the light perpendicularly to a plane including a cut line, in consideration of the energy density and perpendicularity of the cut surface. When the surface of the workpiece is smoothed, the working state is influenced by the angle for applying the light to the surface of the workpiece.

Namely, optimum conditions are set in consideration of the relation between the energy density and the irradiated region (worked region). It is also possible to change the energy density by adjusting the focal length of the lens or the mirror for converging the light and the positional relation between the focal point and the workpiece. If the energy density is less than $10^{-1}$ J/cm$^2$ or 10 W/cm$^2$, it is impossible to attain energy conditions for decomposing the aluminum nitride ceramics. When the energy density exceeds $10^5$ J/cm$^2$ or $10^{11}$ W/cm$^2$, on the other hand, bad influences such as deterioration of the performance of the material itself are exerted on portions of the aluminum nitride ceramics workpiece other than the worked portion.

An excimer laser beam has a rectangular section of about 10 mm by 20 mm in general, and the energy profile of its section is not homogeneous but distributed. In this energy distribution, peripheries are at low energy levels, while a central portion is in the form of a relatively loose peak. Such heterogeneity of the energy reduces the accuracy, to bring irregularity etc. into the working surface of the aluminum nitride ceramics workpiece. Also when the laser beam is converged through a lens, such energy distribution is maintained as such, to cause heterogeneity in the working surface of the aluminum nitride ceramics workpiece.

However, the inventors have newly discovered that a surface of an aluminum nitride ceramics workpiece which is irradiated with a laser beam linearly converged through a cylindrical lens is homogeneously and flatly worked while its cut surface is also worked in high accuracy at a high speed. While the cause therefor has not yet been clarified, there may exist conditions for canceling the aforementioned problem by unidirectionally converging the laser beam.

Depending on the state of the excimer laser beam, further, heterogeneity may be caused on both ends of a portion which is worked with the linearly converged beam. In this case, it is possible to obtain a homogeneous working surface by screening both end portions of the laser beam. In addition, it has also been proved that substantially no bad influence is exerted on the working accuracy when energy dispersion in a laser beam section is suppressed to not more than 10 %. The energy can be homogenized by a method of employing a homogenizer or a method of cutting out only a central portion having homogeneous energy distribution through a mask or the like.

It has been recognized that the atmosphere for working aluminum nitride ceramics influences on the working situation. When an ArF excimer laser beam is employed, it is preferable to work the surface of the aluminum nitride ceramics workpiece in a vacuum or an inert atmosphere of nitrogen or helium gas, in order to prevent damping of the energy caused by absorption of oxygen. Also when a laser beam having a wavelength exceeding that of the ArF excimer laser beam is employed, a vacuum or an inert gas atmosphere of a light element such as helium is effective for obtaining a smooth working surface, due to facilitation of scattering of removed materials. It is necessary to converge an $F_2$ excimer laser beam or SOR, which is light of the vacuum ultraviolet region, in a high vacuum through a total reflection mirror.

When a pulsed laser beam is employed, it is preferable to increase the working speed in proportion to the pulse repetitive rate, while employing a laser oscillator having a high repetitive rate. The etching speed tends to be increased as the energy density is increased, and hence it is preferable to employ a unit which can generate high energy in order to carry out cutting.

In working employing an excimer laser beam (excimer laser ablation), a light element tends to be scattered and hence a layer of a heavy element is formed on the surface of the workpiece. In the case of aluminum nitride ceramics, the light element of nitrogen tends to be scattered in the atmosphere, and hence a metal layer consisting of aluminum is formed on the working surface. When ablation is carried out with an excimer laser beam in an acidic or alkaline solution which can dissolve the metallic aluminum, it is possible to obtain a smoother working surface at a working speed which is higher than that in the atmosphere.

When hydrogen ion concentration is increased, however, dissolution of the metal layer formed on the aluminum nitride ceramics portion which is irradiated with the laser beam extremely progresses to roughen the working surface and deteriorate the working accuracy, although the working speed is improved. Therefore, an aqueous solution having a pH value of at least 3 and not more than 6 is effective as the acidic solution. Aluminum nitride ceramics has strong corrosion resistance against acid, and hence nitric acid, hydrochloric acid, sulfuric acid or aqua regia having strong oxidative power is employed.

On the other hand, aluminum nitride ceramics has weak corrosion resistance against an alkaline solution, and hence a strong alkaline solution having a pH value exceeding 11 is unsuitable. When oxyhydrogen ion concentration is increased, the aluminum nitride ceramics is so corroded that it is necessary to remove the decomposition layer as formed although the working speed is improved. When the oxyhydrogen ion concentration is at a low level, it is possible to obtain a smoother working surface.

The aluminum nitride ceramics is corrosion-resistant against an aqueous solution of sodium hydroxide at the room temperature while the same is also corrosion-resistant against an aqueous solution of potassium hydroxide. The alkaline solution is selected from these two types of solutions since the sample temperature is hardly increased by irradiation with the laser beam.

In order to attain a more preferable effect, it is more preferable to apply the laser beam in an aqueous solution having a pH value of at least 3 and not more than 5, or at least 9 and not more than 11 particularly in consideration of the working speed, roughness of the working surface, practicality and economy.

The laser beam is treated with a mask to be reduced/projected, and applied to the surface of the aluminum nitride ceramics workpiece. It is possible to converge the laser beam to a spot of several $\mu$m, which cannot be obtained by focal convergence, by reducing/projecting the laser beam in the aforementioned manner. Further, it is possible to attain an extremely high energy density by narrowing the laser beam to such a small spot diameter. In addition, it is possible to obtain an extremely sharp working end having a high aspect ratio since energy distribution is substantially homogeneous on the imaging plane although that in the laser beam is heterogeneous along Gaussian distribution. The term "aspect ratio" for drilling indicates a value which is expressed in $2t/(d_1 - d_2)$ assuming that $d_1$ represents the diameter of the hole as formed on the surface side, $d_2$ represents that of the hole on the bottom surface side and $\underline{t}$ represents the depth of the hole. In this case, it is possible to obtain a working end having a high aspect ratio of at least 20.

When the optical path is lengthened, the reduction ratio is increased and the energy density is improved, the working speed is improved. It is well known that a spot diameter $W(f)$ of a laser beam, being a Gaussian beam, which is narrowed at a focal length $\underline{f}$ is approximately as follows:

$$W(f) = f \cdot \theta$$

where $\theta$ represents the divergence angle. Thus, it is preferable to reduce the divergence angle $\theta$, which is an important factor for obtaining an excellent convergence state.

However, an excimer laser beam, which is generally oscillated from a laser oscillator at a large divergence angle of 1 to 3 mrad, can be converged merely to several ten $\mu$m due to influence by lens aberration or the like. Therefore, an unstable resonator is employed to narrow the divergence angle of the laser beam to 0.2 mrad, whereby the spot diameter can be narrowed to about 1/10. Further, the excimer laser beam has an inferior imaging state due to a wide half-width of the oscillation spectrum and large chromatic aberration by the lens. One of advantages in such reduction/projection of the laser beam through a mask is reduction of an image as well as a cut margin. In order to effectuate this advantage, it is necessary to reduce the influence by the aberration of the optical system. Thus, it is possible to narrow the spot diameter to about 10 $\mu$m by setting the laser beam at a half-width of the oscillation spectrum in the range of at least $10^{-4}$ nm and not more than $10^{-2}$ nm and reducing the divergence angle to not more than 0.2 mrad through an injection-locked method.

According to the present invention, it is possible to obtain a method of accurately working aluminum nitride ceramics in high efficiency. Thus, it is possible to apply the aluminum nitride ceramics to the field of structural parts in which the aluminum nitride ceramics cannot generally been worked due to high hardness and relatively inferior oxidation resistance thereof or to which the same cannot generally been applied due to a high cost. Further, it is possible to three-dimensionally and ultraprecisely work aluminum nitride ceramics.

The foregoing and other objects, features, aspects and advantages of the present invention will become more apparent from the following detailed description of the present invention when taken in conjunction with the accompanying drawings.

## BRIEF DESCRIPTION OF THE DRAWINGS

Fig. 1 schematically illustrates the structure of a unit employed for Examples 1 and 3 of the present invention;

Fig. 2 schematically illustrates the structure of a unit employed for Example 2 of the present invention;

Fig. 3 schematically illustrates the structure of a unit employed for Example 4 of the present invention; and

Fig. 4 schematically illustrates the structure of a unit employed for Example 5 of the present invention.

## DESCRIPTION OF THE PREFERRED EMBODIMENTS

### Example 1

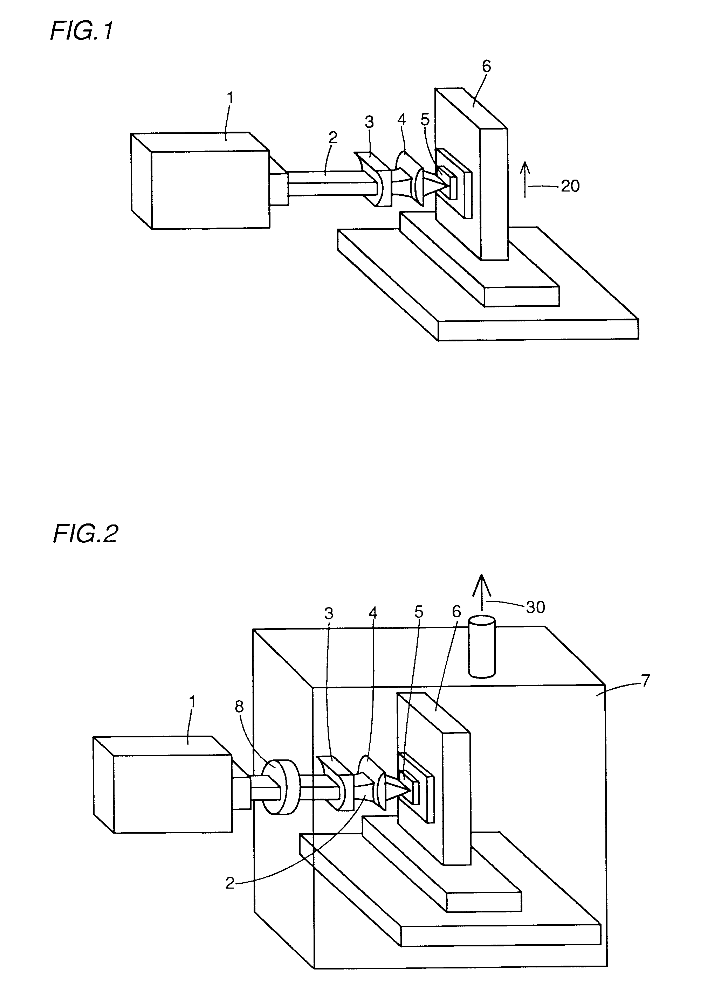

As shown in Fig. 1, a surface of an aluminum nitride ceramics workpiece 5 was cut through an excimer laser unit 1. The aluminum nitride ceramics workpiece 5 was in the form of a plate of 25 mm square having a thickness of 2 mm. The employed excimer laser was a KrF excimer laser having an oscillation wavelength of 248 nm. The aluminum nitride ceramics workpiece 5 was placed on an XYZ table 6.

Convex and concave cylindrical lenses 4 and 3 of synthetic quartz were combined with each other to converge the laser beam 2 to 25 mm in length and 100 $\mu$m in width, for irradiating the surface of the target aluminum nitride ceramics workpiece 5 with this laser beam 2 in the atmosphere. At this time, the laser beam 2 had an energy density of 10 J/cm$^2$. The pulse repetitive rate of the laser beam 2 was 100 Hz.

The angle of irradiation was set in the normal direction to the surface of the aluminum nitride ceramics workpiece 5. The aluminum nitride ceramics workpiece 5 was placed perpendicularly to the laser beam 2, and scanned in a direction shown by arrow 20 in Fig. 1 at a speed of 2 mm/min. over a length of 25 mm once.

After the working, the workpiece 5 exhibited a thickness of 1.9 mm and surface roughness of 0.4 $\mu$m.

### Example 2

As shown in Fig. 2, a surface of an aluminum nitride ceramics workpiece 5 was cut through an excimer laser unit 1. The aluminum nitride ceramics workpiece 5 was in the form of a plate of 25 mm square having a thickness of 2 mm. The employed excimer laser was an ArF excimer laser having an oscillation wavelength of 193 nm. The aluminum nitride ceramics workpiece 5 was placed on an XYZ table 6, and set in a vacuum vessel 7. The vacuum vessel 7 was evacuated by gas absorption in a direction along arrow 30 in Fig. 2.

Convex and concave cylindrical lenses 4 and 3 of synthetic quartz were combined with each other to converge the laser beam 2 to 25 mm in length and 100 $\mu$m in width. This laser beam 2 was introduced from a synthetic quartz window 8, to be applied to the surface of the aluminum nitride ceramics workpiece 5 in a vacuum. At this time, the laser beam 2 had energy density of 10 J/cm$^2$. The pulse repetitive rate of the laser beam 2 was set at 100 Hz.

The angle of irradiation was set in the normal direction to the surface of the aluminum nitride ceramics workpiece 5. The aluminum nitride ceramics workpiece 5 was placed perpendicularly to the laser beam 2, and scanned at a speed of 4 mm/min. over a length of 25 mm once.

After the working, the workpiece 5 exhibited a thickness of 1.9 mm and surface roughness of 0.1 $\mu$m.

### Example 3

As shown in Fig. 1, an aluminum nitride ceramics workpiece 5 was cut through an excimer laser unit 1 which was similar to that in Example 1. The aluminum nitride ceramics workpiece 5 was in the form of a thin plate having a thickness of 3 mm and a diameter of 50 mm. The employed excimer laser was an XeCl excimer laser having a wavelength of 308 nm. This laser was improved in parallelism of rays by an unstable resonator, and energy density dispersion was brought into 9 % at the maximum through a homogenizer.

Convex and concave cylindrical lenses 4 and 3 of synthetic quartz were combined with each other to converge the laser beam 2 to 25 mm in length and 10 $\mu$m in width, for irradiating the surface of the aluminum nitride ceramics workpiece 5 with this laser beam 2. At this time, the laser beam 2 had a mean energy density of 10$^2$ J/cm$^2$. The pulse repetitive rate of the laser beam 2 was set at 200 Hz.

The angle of irradiation was set in parallel with the normal direction to the surface of the aluminum nitride ceramics workpiece 5. The aluminum nitride ceramics workpiece 5 was driven perpendicularly to the laser beam 2. A region of 25 mm in width was irradiated with the laser beam 2 for 180 seconds with respect to a cut width of 50 mm, and thereafter the laser beam 2 was transversely displaced so that the remaining region of 25 mm in width was also irradiated with the laser beam 2 for 180 seconds. The aluminum nitride ceramics workpiece 5 was cut by such irradiation for 360 seconds in total. The cut margin was about 30 $\mu$m.

It was confirmed through observation with an electron microscope that neither traces of melting nor cracks were present on the cut surface.

Example 4

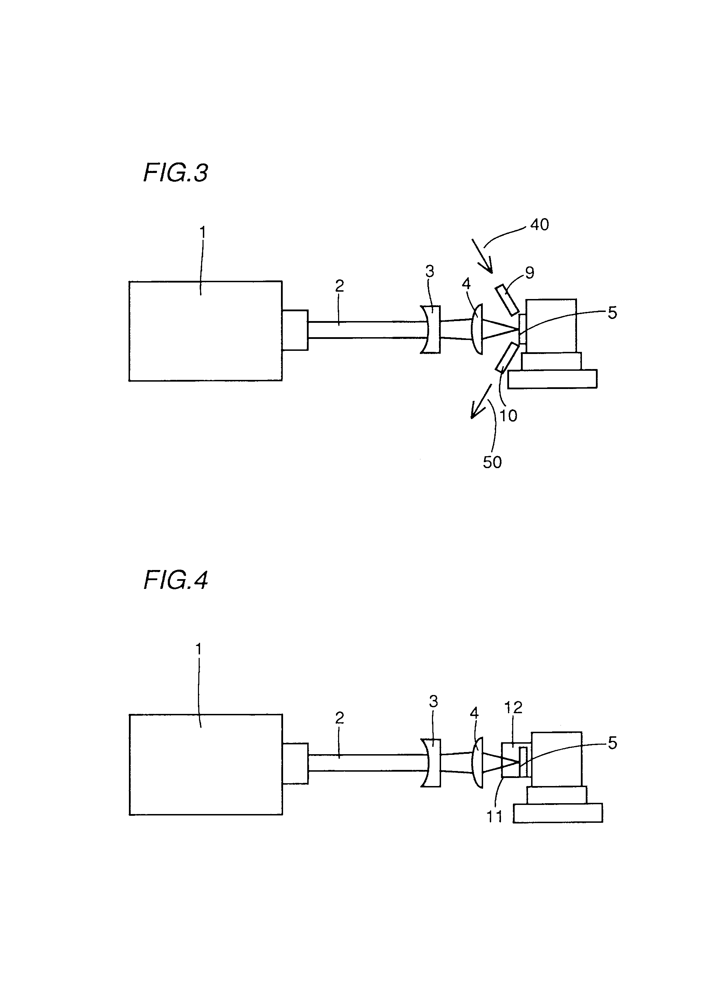

As shown in Fig. 3, an aluminum nitride ceramics workpiece 5 was cut through an excimer laser unit 1. The aluminum nitride ceramics workpiece 5 was in the form of a thin plate of 5 mm square having a thickness of 2 mm. The employed excimer laser was an ArF excimer laser having a wavelength of 193 nm. This laser was narrowed in band width through a prism and a grating, and employed with improvement in parallelism of rays through an unstable resonator which was set on an amplifying side. Consequently, the half-width of the oscillation wavelength of 193 nm was narrowed to 5/1000 nm.

Convex and concave cylindrical lenses 4 and 3 of synthetic quartz were combined with each other to converge the laser beam 2 which was treated in the aforementioned manner to 10 $\mu$m square, for applying this laser beam 2 onto the surface of the aluminum nitride ceramics workpiece 5 while spraying helium (He) gas from a spray nozzle 9. The helium gas was supplied to the nozzle 9 in a direction along arrow 40, and discharged through an exhaust duct 10 in a direction along arrow 50. At this time, the laser beam 2 had a mean energy density of $10^5$ J/cm$^2$. The pulse repetitive rate of the laser beam 2 was set at 200 Hz.

The angle of irradiation was set in parallel with the normal direction to the surface of the aluminum nitride ceramics workpiece 5. The aluminum nitride ceramics workpiece 5 was driven perpendicularly to the laser beam 2. The workpiece 5 was scanned at a speed of 5 mm/min. over a width of 5 mm, to be cut through irradiation for 60 seconds. The cut margin was about 20 $\mu$m.

It was confirmed through observation with an electron microscope that the cut surface was extremely smooth with no adhesion of removed materials. Further, no cracks etc. were observed in a peripheral region of the worked part.

Example 5

As shown in Fig. 4, an aluminum nitride ceramics workpiece 5 was cut through an excimer laser unit 1. The aluminum nitride ceramics workpiece 5 was in the form of a thin plate of 5 mm square having a thickness of 1.5 mm. The employed excimer laser was a KrF excimer laser having a wavelength of 248 nm. This laser was narrowed in band width through a prism and a grating, and employed with improvement in parallelism of rays through an unstable resonator which was set on an amplifying side. Consequently, the half-width of the oscillation wavelength of 248 nm was narrowed to 5/1000 nm.

Convex and concave cylindrical lenses 4 and 3 of synthetic quartz were combined with each other to converge the laser beam 2 which was treated in the aforementioned manner to 10 $\mu$m square, for applying this laser beam 2 onto the surface of the aluminum nitride ceramics workpiece 5 which was set in nitric acid 12. At this time, the nitric acid 12 as employed had a pH value of 3.

The aluminum nitride ceramics workpiece 5 was set in a cell 11 of synthetic quartz transmitting ultraviolet light. This aluminum nitride ceramics workpiece 5 was irradiated with the laser beam 2 through an optically ground quartz plate. At this time, the laser beam 2 had a mean energy density of $10^3$ J/cm$^2$. The pulse repetition rate of the laser beam 2 was set at 200 Hz.

The angle of irradiation was set in parallel with the normal direction to the surface of the aluminum nitride ceramics workpiece 5. The aluminum nitride ceramics workpiece 5 was driven perpendicularly to the laser beam 2. The workpiece 5 was scanned at a speed of 7.5 mm/min. over a width of 5 mm, to be cut through irradiation for 40 seconds. The cut margin was about 30 $\mu$m.

It was confirmed through observation with an electron microscope that the cut surface was extremely smooth with no adhesion of removed materials. Further, no cracks etc. were observed in a peripheral region of the worked part.

Example 6

An aluminum nitride ceramics workpiece was cut through an excimer laser unit. The aluminum nitride ceramics workpiece was in the form of a thin plate of 20 mm square having a thickness of 3 mm. The employed excimer laser was a KrF excimer laser having a wavelength of 248 nm. This laser was narrowed in band width through a prism and a grating, and employed with improvement in parallelism of rays through an unstable resonator which was set on an amplifying side. Consequently, the half-width of the oscillation wavelength of 248 nm was narrowed to 5/1000 nm.

This laser beam was worked into 1.5 by 20 mm through a metal mask, and reduced/projected to about 20 $\mu$m by 20 mm through a cylindrical lens which was separated from the mask by about 3.5 m, to be applied to the surface of the aluminum nitride ceramics workpiece. The focal length of the cylindrical lens with respect to the KrF laser beam was 45 mm, and the reduction ratio was 1/75. At this time, the laser beam had a mean energy density of 2 x $10^2$ J/cm$^2$. The pulse repetition rate of the laser beam was set at 200 Hz.

The angle of irradiation was set in parallel with the normal direction to the surface of the aluminum nitride ceramics workpiece, to cut the workpiece through irradiation for about 60 seconds. The cut margin was about 20 $\mu$m.

It was confirmed through observation with an electron microscope that the cut surface was extremely smooth, and it was possible to obtain an extremely sharp working end with no sagging. Further, no cracks etc. were observed in a peripheral region of the worked part.

Although the present invention has been described in detail, it is clearly understood that the same is by way of illustration and example only and is not to be taken by way of limitation, the spirit and scope of the present invention being limited only by the terms of the appended claims.

**Claims**

1. A method of working aluminum nitride ceramics by irradiating a surface of an aluminum nitride ceramics workpiece (5) with light (2), said surface being irradiated with light having a wavelength of not more than 360 nm.

2. A method of working aluminum nitride ceramics by irradiating a surface of an aluminum nitride ceramics workpiece (5) with light (2), said surface being irradiated with light having a wavelength being in the range of at least 190 nm and not more than 360 nm.

3. The method of working aluminum nitride ceramics in accordance with claim 1, wherein said light (2) being applied to said surface of said aluminum nitride ceramics workpiece (5) has an energy density being in the range of at least 10 W/cm$^2$ and not more than $10^{11}$ W/cm$^2$.

4. The method of working aluminum nitride ceramics in accordance with claim 2, wherein said light (2) is a pulsed laser beam.

5. The method of working aluminum nitride ceramics in accordance with claim 4, wherein said pulsed laser beam (2) being applied to said surface of said aluminum nitride ceramics workpiece (5) has an energy density per pulse being in the range of at least $10^{-1}$ J/cm$^2$ and not more than $10^6$ J/cm$^2$.

6. The method of working aluminum nitride ceramics in accordance with claim 4, wherein the divergence angle of said laser beam (2) being oscillated from a laser oscillator (1) is at least $10^{-2}$ mrad and not more than 5 x $10^{-1}$ mrad.

7. The method of working aluminum nitride ceramics in accordance with claim 4, wherein the half-width of an oscillation spectrum of said laser beam (2) is at least $10^{-4}$ nm and less than 1 nm.

8. The method of working aluminum nitride ceramics in accordance with claim 4, wherein energy dispersion in a section of said laser beam (2) is not more than 10 %.

9. The method of working aluminum nitride ceramics in accordance with claim 4, wherein said pulsed laser beam (2) is converged through a cylindrical lens (3, 4) or a cylindrical mirror to be applied to said surface of said aluminum nitride ceramics workpiece (5).

10. The method of working aluminum nitride ceramics in accordance with claim 4, wherein said light (2) is applied in an aqueous solution (12) having a pH value of at least 3 and not more than 6.

11. The method of working aluminum nitride ceramics in accordance with claim 10, wherein said light (2) is applied in a solution (12) of at least one material being selected from the group consisting of nitric acid, hydrochloric acid, sulfuric acid and aqua regia.

12. The method of working aluminum nitride ceramics in accordance with claim 4, wherein said light is applied in an aqueous solution having a pH value of at least 8 and not more than 11.

13. The method of working aluminum nitride ceramics in accordance with claim 12, wherein said light is applied in a solution of at least one material being selected from potassium hydroxide and sodium hydroxide.

14. The method of working aluminum nitride ceramics in accordance with claim 4, wherein said laser beam is treated through a mask to be reduced/projected.

15. The method of working aluminum nitride ceramics in accordance with claim 14, employing a laser beam having a divergence angle of not more than 0.2 mrad in oscillation from a laser oscillator and a half-width of an oscillation spectrum of at least $10^{-4}$ nm and not more than $10^{-2}$ nm.

FIG.1

FIG.2

EP 0 669 297 A1

*FIG.3*

*FIG.4*

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PROCEEDINGS OF THE 1991 INTERNATIONAL SYMPOSIUM ON MICROELECTRONICS, PUB, 21 October 1991 - 23 October 1991 ORLANDO, USA, pages 353-358, LUMPP J.K. & ALLEN S.D. 'Excimer laser etching of aluminum nitride' * abstract * * pages 353,354: 'Experimental procedure' * | 1,2,4,9 | C04B41/00 B28D1/22 |
| A | | 3,5-8, 14,15 | |
| X | PROCEEDINGS OF THE SPIE- THE INTERNATIONAL SOCIETY FOR OPTICAL ENGINEERING. EXCIMER LASERS AND APPLICATIONS III, 13-15 MARCH 1991, THE HAGUE, NL, vol. 1503, pages 238-248, GEIGER M., LUTZ N., BIERMANN S. 'Excimer laser processing of ceramics and fibre reinforced polymers assisted by a diagnostic system' * the whole document * | 1,2,4,5, 9 | |
| | | | TECHNICAL FIELDS SEARCHED (Int.Cl.6) C04B B28D |
| A | | 3,6-8, 14,15 | |

-/--

The present search report has been drawn up for all claims

| Place of search | Date of completion of the search | Examiner |
|---|---|---|
| THE HAGUE | 31 May 1995 | Rigondaud, B |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PROCEEDINGS OF THE SPIE-THE INTERNATIONAL SOCIETY FOR OPTICAL ENGINEERING. NINTH INT. SYMPOSIUM ON GAS FLOW AND CHEMICAL LASERS,1993, vol. 1810, 21 September 1992 - 25 September 1992 pages 615-619, TSETSEKOU A. & AL. 'Excimer laser treatment of aluminium nitride' * the whole document * | 1,2,4,5 | |
| A | | 3,6-9, 14,15 | |
| A | DATABASE WPI Section Ch, Week 8918 Derwent Publications Ltd., London, GB; Class L02, AN 89-133573 & JP-A-01 077 506 ( FUJITSU LTD) , 23 March 1989 * abstract * | 1,2,4, 10,11 | |
| A | DE-A-41 19 878 (SÄNDIG SABINE & VOIGT MATHIAS) * the whole document * | 1-5,9 | TECHNICAL FIELDS SEARCHED (Int.Cl.6) |
| A | EP-A-0 567 129 (SUMITOMO ELECTRIC INDUSTRIES, LTD.) | | |

The present search report has been drawn up for all claims

| Place of search | Date of completion of the search | Examiner |
|---|---|---|
| THE HAGUE | 31 May 1995 | Rigondaud, B |

EPO FORM 1503 03.82 (P04C01)